Europäisches Patentamt

European Patent Office

Office européen des brevets

(11) Veröffentlichungsnummer : **0 126 912**
**B1**

(12) **EUROPÄISCHE PATENTSCHRIFT**

(45) Veröffentlichungstag der Patentschrift :
19.07.89

(21) Anmeldenummer : 84103858.1

(22) Anmeldetag : 06.04.84

(51) Int. Cl.⁴ : **B 23 D 55/10**, B 23 D 55/08//
A22B5/20

(54) Bandsäge zum Teilen von Tierkörpern.

(30) Priorität : 30.05.83 DE 3319623

(43) Veröffentlichungstag der Anmeldung :
05.12.84 Patentblatt 84/49

(45) Bekanntmachung des Hinweises auf die Patenterteilung : 19.07.89 Patentblatt 89/29

(84) Benannte Vertragsstaaten :
AT BE CH DE FR GB IT LI LU NL SE

(56) Entgegenhaltungen :
DE--C-- 724 275
DE--C-- 827 410
FR--A-- 751 826
US--A-- 2 644 492

(73) Patentinhaber : SCHMID & WEZEL
Bahnhofstrasse 18/18a
D-7133 Maulbronn (DE)

(72) Erfinder : Elmer, Stefan
Mühlackerstrasse 25
D-7136 Oetisheim (DE)
Erfinder : Forberger, Erich
Reutstrasse 8
D-7133 Maulbronn 2 (DE)

(74) Vertreter : Dreiss, Hosenthien & Fuhlendorf
Gerokstrasse 6
D-7000 Stuttgart 1 (DE)

EP 0 126 912 B1

## Beschreibung

Die Erfindung betrifft eine Bandsäge zum Teilen von Tierkörpern mit einer Spannvorrichtung zum Spannen des endlos um zwei Rollen umlaufenden Sägebands und zwei Schränkführungen, durch die das schneidende Trumm des Sägebands etwa fluchtend in der Umlaufebene der beiden Rollen verschränkt geführt ist.

Eine solche Bandsäge ist aus der DE-OS 31 23 439 bekannt. Das bei solchen Sägen verwendete Sägeband verschleißt relativ schnell und muß häufig ausgewechselt werden. Beim Einsatz der Bandsäge in einer Schlachtstraße bedingt ein solcher Bandwechsel eine Taktunterbrechung. Der Bandwechsel muß daher möglichst einfach und rasch erfolgen können.

Aufgabe der vorliegenden Erfindung ist es, die eingangs beschriebene Bandsäge so zu verbessern, daß das Sägeband einfach und rasch ausgetauscht werden kann.

Zur Lösung dieser Aufgabe sieht die Erfindung vor, daß die Spannvorrichtung mindestens eine erste Feder aufweist, durch die mit einer relativ niedrigen Grundspannung das Sägeband vorgespannt wird, daß die Spannvorrichtung mindestens eine weitere Feder aufweist, durch die das Sägeband seine Endspannung erhält und daß ein Arbeitsglied vorgesehen ist, durch das die Spannkraft der weiteren Feder bzw. Federn zum Bandwechsel aufhebbar ist.

Durch die Anordnung der ersten Feder kann das Sägeband mit wenigen Handgriffen rasch auf die beiden Rollen aufgelegt werden. Mit der geringen Vorspannung ist es dann möglich, das schneidende Trumm des Sägebands ohne wesentlichen Kraftaufwand in die Schränkführungen einzuführen, und dabei gegebenenfalls in die Arbeitslage zu verschränken. Erst danach wird die volle Spannkraft auf das Sägeband aufgebracht. Der Bandwechsel kann so besonders rasch und sicher sägebandschonend erfolgen.

Dadurch, daß als Arbeitsglied ein mit einem Druckmedium beaufschlagbarer Arbeitszylinder gewählt wird, wobei durch den Druck des Druckmediums die Spannkraft der weiteren Feder bzw. Federn aufhebbar ist und ohne Druckmediumbeaufschlagung des Arbeitszylinders die Spannkraft der weiteren Feder das Sägeband spannt, ist der Bandsägebetrieb sicher, eine dauernde Druckbeaufschlagung des Arbeitsglieds ist nicht erforderlich. Um große Spannkräfte bei möglichst geringen Federabmessungen raumsparend unterbringen zu können, kann besonders vorteilhaft die weitere Feder durch ein Tellerfederpaket gebildet sein. Zur weiteren Platzeinsparung kann das Arbeitsglied ein einseitig wirkender Arbeitszylinder sein, wobei dann die weitere Feder auf der dem Druckraum gegenüberliegenden Kolbenseite direkt auf den Kolben wirkend Baulänge einsparend angeordnet sein kann.

Das Arbeitsglied und die weitere Feder können konstruktiv besonders einfach als leicht austauschbare für sich montierbare Baueinheit ausgebildet werden, wenn der Kolben einen aus dem Arbeitszylindergehäuse ragenden Stößel aufweist, über den eine der Rollen gegenüber der anderen Rolle verschiebbar ist.

Eine Verringerung des Konstruktionsgewichts bei kurzer Baulänge kann dadurch erreicht werden, daß der Kolben des Arbeitszylinders fest mit einer durch die weitere Feder geführten Führungsstange verbunden ist und daß das freie Ende dieser Führungsstange in einer Vorspannungseinstellschraube geführt ist. Dabei kann der Stößel durch die durch den Kolben geführte verlängerte Führungsstange gebildet sein, um so den Kolben möglichst kurz ausbilden zu können. Zur Aufhebung der Endspannkraft des Sägebands wird über den Arbeitszylinder die Vorspannung der weiteren Feder erhöht. Die gesamte Federvorspannkraft wird vom Arbeitszylinder aufgenommen und nicht auf das Sägeband übertragen.

Dadurch, daß die Schränkführungen jeweils mittels eines Arbeitsglieds, vorzugsweise eines Arbeitszylinders verschiebbar oder schwenkbar gegenüber dem schneidenden Trumm des Sägebands angeordnet sind, wird das Auswechseln eines Sägebands zeitsparend wesentlich erleichtert. Der eigentliche Schränkvorgang kann dann praktisch selbsttätig automatisch mit dem Spannen des Sägebands verbunden werden, wobei der Schränkvorgang kurzzeitig vor dem Spannvorgang ausgeführt wird, um die Sägebandbeanspruchung möglichst gering zu halten. Besonders vorteilhaft kann durch eine mechanische oder elektrische Steuerung bei einem Bandwechsel beim Entspannen zuerst über den auf die weitere Feder wirkenden Arbeitszylinder die Bandspannung aufgehoben werden und dann erst die Schränkführungen zur Freigabe des Sägebands zurückgeschoben oder geschwenkt werden, wogegen dann zum Spannen des Sägebands umgekehrt zuerst die Schränkführungen von ihrer Bandwechselstellung in ihre Schränkstellung zurückgeführt werden und dann kurzzeitig danach die weitere Feder zur Erzielung der Sägebandendspannung von dem auf sie wirkenden Arbeitsglied wieder freigegeben wird. Die Handhabung kann von Hand mit einer entsprechenden Schaltsperre mechanisch oder elektrisch durch Umschalter nur in der vorgegebenen Reihenfolge erfolgen, gegebenenfalls auch über Zeitverzögerungsschalter schränken, spannen bzw. entspannen, entschränken.

Besonders vorteilhaft kann die Schränkführung koaxial zum schneidenden Trumm des Sägebands um etwa 90° drehbar geführt sein. Dazu kann die Schränkführung an einem zylindrischen zum Sägeband koaxial verlaufenden, das Sägeband umschließenden geschlitzten Führungsrohr drehbar geführt sein. So wird durch das Führungsrohr gleichzeitig ein Teil des Sägebands abgedeckt geführt. Bei einem Sägebandbruch kann dann das Sägeband nicht abgeschleudert werden.

Bei einer anderen Ausführungsform kann die Schränkführung am Ende eines vom Arbeitszylinder schwenkbaren Schwenkhebel vorgesehen sein, wobei die Schwenkebene in der Schnittebene des Sägebands oder in einer zur Schnittebene des Sägebands senkrechten Ebene liegen kann.

Bei einer weiteren Ausführungsform kann die Schränkführung durch zwei zangenartig gegeneinander bewegbare Backen gebildet werden, durch die in geschlossenem Zustand das Sägeband verschränkt geführt wird.

Weitere erfindungsgemäße Ausbildungen sind den Unteransprüchen zu entnehmen und werden mit ihren Vorteilen in der nachstehenden Beschreibung näher erläutert. In den beigefügten Zeichnungen zeigt :

Figur 1 eine Seitenansicht einer Bandsäge,

Figur 2 einen Teilschnitt entlang der Linie II-II in Fig. 1 durch die Spannvorrichtung für das Sägeblatt, in größerem Maßstab,

Figur 3 einen Teilschnitt entlang der Linie III-III in Fig. 1, die Lagerung der verstellbaren Rolle für das Sägeband mit einer Seitenansicht der Spannvorrichtung, in größerem Maßstab,

Figur 4 einen Schnitt durch die Rollenlagerung entlang der Linie IV-IV in Fig. 3, senkrecht zum Schnitt 3 verlaufend,

Figuren 5 und 6 zwei Ansichten, teilweise im Schnitt durch eine Schränkvorrichtung,

Figuren 7 bis 10 den Figuren 5 und 6 entsprechende Ansichten zweier weiterer Ausführungsformen von Schränkführungen.

Für alle entsprechenden Teile werden bei der Beschreibung der verschiedenen Ausführungsbeispiele die gleichen Bezugszeichen verwendet.

Die Bandsäge weist ein Trägergestell 1 auf, das zur Gewichtsentlastung oder Verbindung mit einem Handhabungsgerät mit Aufhängeösen 2 versehen ist. Im Trägergestellt ist eine motorisch antreibbare Rolle 3 und im Abstand davon in der gleichen Umlaufebene eine weitere Rolle 4 vorgesehen, um die herum ein Sägeband 5 geführt ist. Das vom Trägergestell 1 abgewandte schneidende Trumm 6 des Sägebands 5 ist über zwei im Abstand voneinander angeordnete Schränkführungen 7, 7' um 90° verschränkt geführt, so daß zwischen diesen Schränkführungen das schneidende Trumm 6 in der Ebene der umlaufenden Rollen 3 liegt und in dieser Ebene schneiden kann. Die Schränkführungen 7, 7' bestehen jeweils aus einem Arbeitszylinder 8, 8', auf dessen freiem Ende einer Kolbenstange 9 bzw. 9' Führungsbacken 10, 10' parallel zueinander verlaufend angeordnet sind zwischen den gehärteten Führungsleisten. Zur Verschleißminderung bestehen die Führungsbacken 10, 10' aus Hartmetall. Anstelle der Führungsbacken 10, 10' können auch in bekannter Weise Führungsrollen angeordnet sein. Im ausgefahrenen Zustand der Kolbenstangen 9, 9' ist das schneidende Trumm 6 des Sägebands durch diese Schränkführungen 7, 7' geführt. Zum Auswechseln des Sägebands 5 können die Schränkführungen 7, 7' durch die Arbeitszylinder 8, 8' zurückgezogen werden. Das Sägeblatt 5 kann dann ungehindert auf die Rollen 3, 4 aufgelegt werden, wie dies später noch näher beschrieben wird.

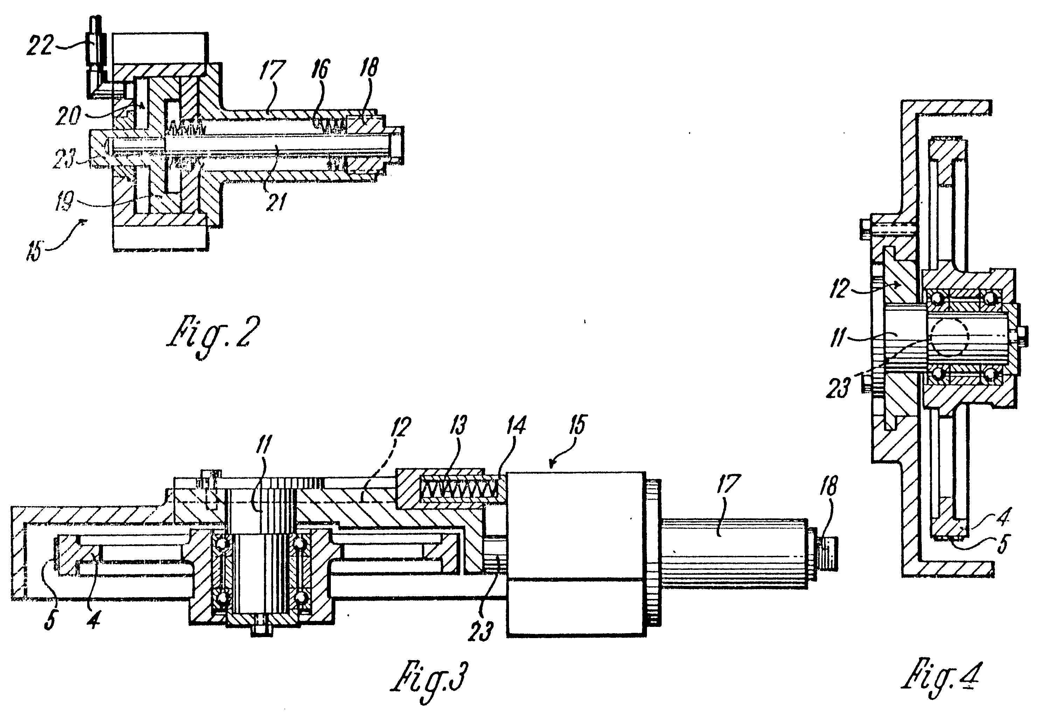

Die Rolle 4 ist auf einem Lagerbolzen 11 drehbar gelagert, wobei der Lagerbolzen 11 selber in einem im Trägergestell 1 verschiebbar geführten Schlitten 12 befestigt ist. Der verschiebbare Schlitten 12 dient zum Spannen des Sägblatts 5. Hierzu ist zur Erzielung einer relativ niedrigen Grundspannung im Schlitten 12 eine erste Feder 13 angeordnet, die sich mit ihrem einen Ende am Schlitten 12 und über einen Stößel 14 am Trägergestell 1 abstützt, wie dies in Fig. 3 erkennbar ist. Die Vorspannung der ersten Feder 13 beträgt ca. 5 kp (50 N), so daß die Vorspannkraft von Hand leicht zum Auf- und Abnehmen eines Sägeblatts 5 überwindbar ist.

Als Baueinheit ist am Trägergestell 1 weiter eine Spannvorrichtung 15 etwa in der Umlaufebene des Sägeblatts 5 angeordnet. Diese Spannvorrichtung 15 weist eine weitere Feder 16 auf, die als Tellerfederpaket in einem mehrteiligen Gehäuse 17 untergebracht ist. Die Feder 16 stützt sich zur Einstellung der Federvorspannung einerseits auf einer Vorspannungseinstellschraube 18 ab. Ihr anderes Ende liegt am Kolben 19 eines Arbeitsglieds in Form eines Arbeitszylinders an. Um den Kolben 19 möglichst kurz zu halten, ist er mit einer durch die Feder 16 hindurchgeführten Führungsstange 21 befestigt, die verschiebbar in der Vorspannungseinstellschraube 18 geführt ist (Fig. 2). Die der Feder 16 gegenüberliegende Seite des Kolbens 19 ist über eine Leitung 22 bspw. mit Druckluft beaufschlagbar, wodurch die Vorspannkraft der Feder 16 überwunden und der Kolben gegen diese Feder 16 hin verschoben wird. Hierdurch wird ein Stößel 23, der aus dem Gehäuse 17 hervorsteht und der sich am Schlitten 12 abstützt, zurückgezogen. Damit entfällt die üblicherweise über den Stößel 23 auf den Schlitten 12 wirkende Spannkraft, die etwa 500 bis 600 kp (5 bis 6 kN) beträgt. Um ein Verkippen möglichst zu vermeiden, liegt die Feder 16 und der Stößel 23 mittig bezüglich des umlaufenden Sägebands 5.

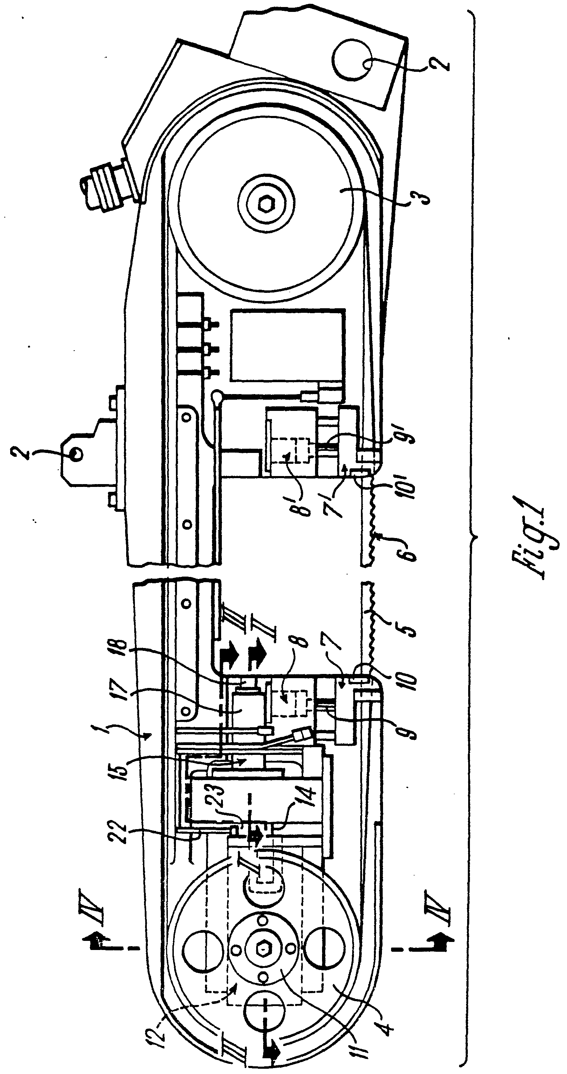

Bei der Montage eines Sägebands 5 wird das Arbeitsglied 20 druckbeaufschlagt, so daß der Schlitten 12 leicht gegen die Spannfeder 13 verschiebbar und somit der Abstand zwischen den beiden Rollen 3, 4 verkleinert wird. Es kann dann auf die beiden Rollen 3, 4 das Sägeband 5 aufgelegt werden. Danach wird der Schlitten 12 wieder freigegeben und durch die erste Feder 13 erfolgt eine Verspannung des Sägebands mit einer Spannkraft von ca. 5 kp (50 N). Danach werden die beiden Schränkführungen 7, 7' bspw. über eine pneumatische Steuerung ausgefahren und das schneidende Trumm zwischen die Führungen 10, 10' der Schränkführungen 7, 7' eingefädelt und in die in Fig. 1 dargestellte Lage verschränkt. Erst danach wird das Arbeitsglied 20 wieder druckentlastet, so daß die Endspannung des Sägeblatts mit einer Spannkraft von etwa 500 bis 600 kp (5 bis 6 kN) erreicht wird. Die Umschaltung der Arbeitsglieder 8 und 20 kann über eine Verzögerungsschaltung kurz verzögert erfolgen, so daß ein rascher Sägeblattwechsel ermöglicht wird. Zur Demontage des Sägeblatts 5 erfolgt in umgekehrter Weise zuerst eine Druckbeaufschlagung des Arbeitsglieds 20 und erst danach wird das Arbeitsglied 8 durch eine Umkehrung der Druckbeaufschlagung umgesteuert, so daß die Kolbenstange 9 bzw. 9' eingezogen und das Sägeblatt von den Schränkführungen 7, 7' freigegeben wird.

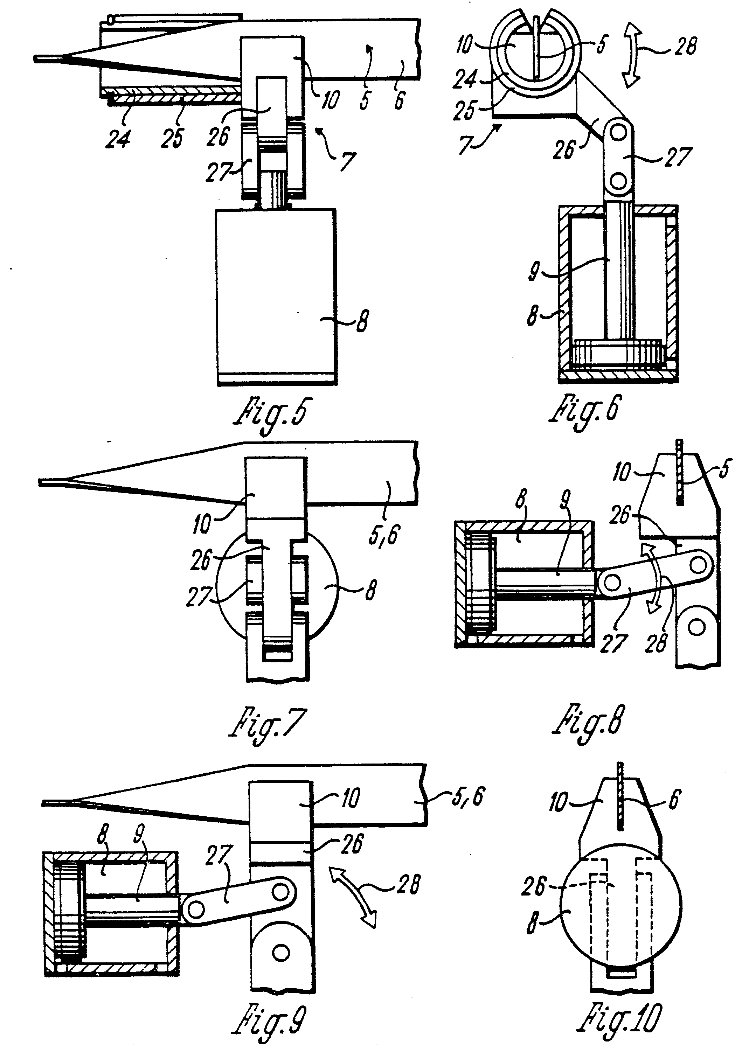

In den Figuren 5 bis 10 sind drei weitere Ausführungsformen der Schränkführungen 7 dargestellt. Beim Ausführungsbeispiel der Figuren 5 und 6 ist am Trägergestell 1 ein Führungsrohr 24 befestigt, auf dem über eine rohrförmige Halterung 25 die Führungsbacken 10 um 90° schwenkbar gehalten sind. Die Halterung 25 ist über einen Schwenkhebel 26 und ein Zwischenglied 27 durch das Arbeitsglied 8 in Richtung des Pfeils 28 etwa um 90° verschwenkbar. Zur Aufnahme des Sägeblatts 5 sind Führungsrohr 24 und Halterung 25 geschlitzt, um so ein leichtes und rasches Auswechseln zu ermöglichen. In der Betriebsstellung sind die Schlitze überdeckt, so daß bei einem Sägebandbruch ein Abschleudern erschwert wird.

Beim Ausführungsbeispiel der Figur 7 ist der Schwenkhebel 26 in Richtung des Pfeils 28 durch das Arbeitsglied 8 über das Zwischenglied 27 ausschwenkbar und zwar aus der Umlaufebene des Sägeblatts 5 heraus, während beim Ausführungsbeispiel der Figur 9 der Schwenkhebel 26 in der Umlaufebene des Sägebands 5 schwenkbar ist. In Figuren 5 bis 10 ist die Schränkführung 7 in ihrer Arbeitsstellung mit geschränkten schneidenden Trumm 6 des Sägebands 5 dargestellt.

## Patentansprüche

1. Bandsäge zum Teilen von Tierkörpern mit einer Spannvorrichtung (15) zum Spannen des endlos um zwei Rollen (3, 4) umlaufenden Sägebands (5) und zwei Schränkführungen (7, 7'), durch die das schneidende Trumm (6) des Sägebands (5) etwa fluchtend in die umlaufende Ebene der beiden Rollen (3, 4) verschränkt geführt ist, dadurch gekennzeichnet, daß die Spannvorrichtung (15) mindestens eine erste Feder (13) aufweist, durch die mit einer relativ niedrigen Grundspannung das Sägeband (5) vorgespannt wird und daß die Spannvorrichtung (15) mindestens eine weitere Feder (16) aufweist, durch die das Sägeband (5) seine Endspannung erhält und daß ein Arbeitsglied (20) vorgesehen ist, durch das die Spannkraft der weiteren Feder (16) bzw. Federn zum Wechseln des Sägebands (5) aufhebbar ist.

2. Bandsäge nach Anspruch 1, dadurch gekennzeichnet, daß das Arbeitsglied (20) ein mit einem Druckmedium beaufschlagbarer Arbeitszylinder ist, wobei durch den Druck des Druckmediums die Spannkraft der weiteren Feder (16) aufhebbar ist und daß ohne Druckmediumbeaufschlagung des Arbeitszylinders die Spannkraft der weiteren Feder (16) das Sägeband (5) spannt.

3. Bandsäge nach Anspruch 1 oder 2, dadurch gekennzeichnet, daß die Vorspannkraft der weiteren Feder (16) einstellbar ist.

4. Bandsäge nach einem der Ansprüche 1 bis 3, dadurch gekennzeichnet, daß die Vorspannkraft der ersten Feder (13) eine Sägblattspannkraft von etwa 2,5 kp (25 N) und die Vorspannkraft der weiteren Feder (16) eine Sägeblattspannkraft von etwa 250 bis 300 kp (2500 bis 3000 N) bewirkt.

5. Bandsäge nach einem der Ansprüche 1 bis 4, dadurch gekennzeichnet, daß die weitere Feder (16) durch ein Tellerfederpaket gebildet ist.

6. Bandsäge nach einem der Ansprüche 1 bis 5, dadurch gekennzeichnet, daß das Arbeitsglied (20) ein einseitig wirkender Arbeitszylinder ist und daß die weitere Feder (16) auf der dem Druckraum gegenüberliegenden Kolbenseite direkt auf den Kolben (19) wirkend angeordnet ist.

7. Bandsäge nach Anspruch 6, dadurch gekennzeichnet, daß der Kolben (19) einen aus dem Arbeitszylindergehäuse (17) ragenden Stößel (23) aufweist, über den eine der Rollen (4) gegenüber der anderen Rolle (3) verschiebbar ist.

8. Bandsäge nach Anspruch 6 oder 7, dadurch gekennzeichnet, daß der Kolben (19) des Arbeitsglieds (20) fest mit einer durch die weitere Feder (16) geführte Führungsstange (21) verbunden ist und daß das freie Ende dieser Führungsstange (21) in einer Vorspannungseinstellschraube (18) geführt ist.

9. Bandsäge nach einem der Ansprüche 1 bis 8, dadurch gekennzeichnet, daß das Arbeitsglied (20) und die weitere Feder (16) in einem gemeinsamen Gehäuse (17) angeordnet sind, und daß dieses Gehäuse (17) austauschbar an dem Trägergestell (1) befestigt ist.

10. Bandsäge nach Anspruch 1, dadurch gekennzeichnet, daß die Schränkführungen (7, 7') jeweils mittels eines Arbeitsglieds (8, 8') vorzugsweise eines Arbeitszylinders verschieb- oder schwenkbar gegenüber dem schneidenden Trumm (6) angeordnet sind.

11. Bandsäge nach einem der Ansprüche 1 bis 10, dadurch gekennzeichnet, daß durch eine mechanische oder elektrische Steuerung bei einem Bandwechseln beim Entspannen zuerst über das auf die weitere Feder (16) wirkende Arbeitsglied (20) diese Bandspannung aufgehoben wird und dann erst die Schränkführungen (7, 7') zur Freigabe des Sägebands (5) zurückverschoben oder — verschwenkt werden und daß zum Spannen des Sägebands (5) zuerst die Schränkführungen (7, 7') von ihrer Bandwechselstellung in ihre Schränkstellung zurückgeführt werden und daß kurzzeitig danach die weitere Feder (16) zur Erzeugung der Sägebandendspannung von dem auf sie wirkenden Arbeitsglied (20) wieder freigegeben wird.

12. Bandsäge nach Anspruch 10 oder 11, dadurch gekennzeichnet, daß die Schränkführung (7, 7') axial zum schneidenden Trumm (6) des Sägebands (5) um etwa 90° drehbar geführt ist.

13. Bandsäge nach Anspruch 12, dadurch gekennzeichnet, daß die Schränkführung (7) an einem zylindrischen zum Sägeband (5) koaxial verlaufenden das Sägeband umfassenden geschlitzten Führungsrohr (24) drehbar geführt ist.

14. Bandsäge nach Anspruch 10 oder 11, dadurch gekennzeichnet, daß die Schränkführung (7) am Ende eines zum Arbeitsglied (8) schwenkbaren Schwenkhebel (26) vorgesehen ist, wobei die Schwenkebene in der Schnittebene des Sägebands (5) (Figuren 9, 10) oder in einer zur Schnittebene des Sägebands (5) senkrechten Ebene liegt (Figuren 7, 8).

15. Bandsäge nach Anspruch 14, dadurch gekennzeichnet, daß der Schwenkhebel (26) über ein Zwischenglied (27) mit dem Arbeitsglied (8) verbunden ist.

16. Bandsäge nach Anspruch 10 oder 11, dadurch gekennzeichnet, daß die Schwenkführung (7) am freien Ende einer Kolbenstange (9,9') eines Arbeitszylinders angeordnet ist.

17. Bandsäge nach Anspruch 10 oder 11, dadurch gekennzeichnet, daß die Schwenkführung (7, 7') zwei zangenartig gegeneinander bewegbaren Backen aufweist, durch die das schneidende Trumm (6) des Sägebands (5) in geschlossenem Zustand der Backen verschränkt geführt ist.

18. Bandsäge nach Anspruch 17, dadurch gekennzeichnet, daß die beiden Backen über eine Verzahnung gegeneinander verschwenkbar gekoppelt sind.

## Claims

1. A band saw for cutting up animal bodies comprising a tensioning means (15) for tensioning the saw belt (5) which passes in endless configuration around two rollers (3, 4), and two setting guides (7, 7') through which the cutting run (6) of the saw belt (5) is guided in set relationship approximately in alignment in the plane of rotary movement of the two rollers (3, 4), characterised in that the tensioning means (15) has at least one first spring (13) for pretensioning the saw belt (5) with a relatively low basic tension and that the tensioning means (15) has at least one further spring (16) for imparting its final tension to the saw belt (5), and that there is provided an operating member (20) for suspending the tensioning force of the further spring or springs (16), for changing the saw belt (5).

2. A band saw according to claim 1 characterised in that the operating member (20) is an operating cylinder which can be acted upon with a pressure fluid, wherein the tensioning force of the further spring (16) can be suspended by the pressure of the pressure fluid and that the tensioning force of the further spring (16) tensions the saw belt (5) when the operating cylinder is not actuated with pressure fluid.

3. A band saw according to claim 1 or claim 2 characterised in that the pretensioning force of the further spring (16) is adjustable.

4. A band saw according to one of claims 1 to 3 characterised in that the pretensioning force of the first spring (13) produces a saw blade tensioning force of about 2.5 kp (25 N) and the pretensioning force of the further spring (16) produces a saw blade tensioning force of about 250 to 300 kp (2500 to 3000 N).

5. A band saw according to one of claims 1 to 4 characterised in that the further spring (16) is formed by a plate spring pack.

6. A band saw according to one of claims 1 to 5 characterised in that the operating member (20) is a single-acting operating cylinder and that the further spring (16) is arranged on the side of the piston which is opposite to the pressure chamber, acting directly on the piston (19).

7. A band saw according to claim 6 characterised in that the piston (19) has a push rod (23) which projects out of the operating cylinder housing (17) and by way of which one of the rollers (4) is slidable relative to the other roller (3).

8. A band saw according to claim 6 or claim 7 characterised in that the piston (19) of the operating member (20) is fixedly connected to a guide rod (21) which is guided through the further spring (16) and that the free end of said guide rod (21) is guided in a pretensioning setting screw (18).

9. A band saw according to one of claims 1 to 8 characterised in that the operating member (20) and the further spring (16) are arranged in a common housing (17) and that said housing (17) is replaceably secured to the carrier frame (1).

10. A band saw according to claim 1 characterised in that the setting guides (7, 7') are each arranged to be displaced or pivoted relative to the cutting run (6) by means of a respective operating member (8, 8'), preferably an operating cylinder.

11. A band saw according to one of claims 1 to 10 characterised in that, by a mechanical or electrical control means, in a belt change operation, when relieving the belt tension the belt tension is firstly removed by way of the operating member (20) which acts on the further spring (16) and only then are the setting guides (7, 7') moved or pivoted back to release the saw belt (5) and that for tensioning the saw belt (5) the setting guides (7, 7') are first moved back from their belt change position into their setting position and that shortly thereafter the further spring (16) is released again from the operating member (20) acting thereon, to produce the final saw belt tension.

12. A band saw according to claim 10 or claim 11 characterised in that the setting guide (7, 7') is guided for rotary movement through about 90° in axial relationship with the cutting run (6) of the saw belt (5).

13. A band saw according to claim 12 characterised in that the setting guide (17) is guided rotatably on a cylindrical slitted guide tube (24) which extends coaxially with respect to the saw belt (5) and which embraces the saw belt.

14. A band saw according to claim 10 or claim 11 characterised in that the setting guide (7) is provided at the end of a pivotal lever (26) which is pivotable with respect to the operating member (8), wherein the plane of pivotal movement is in the cutting plane of the saw belt (5) (Figures 9 and 10) or in a plane perpendicular to the cutting plane of the saw belt (5) (Figures 7 and 8).

15. A band saw according to claim 14 characterised in that the pivotal lever (26) is connected to the operating member (8) by way of an intermediate member (27).

16. A band saw according to claim 10 or claim 11 characterised in that the pivotal guide (7) is arranged at the free end of a piston rod (9, 9') of an operating cylinder.

17. A band saw according to claim 10 or claim 11 characterised in that the pivotal guide (7, 7') has two jaws which are movable towards each other in a tongs-like arrangement and which guide the cutting run (6) of the saw belt (5) in a set position, in the closed condition of the jaws.

18. A band saw according to claim 17 characterised in that the two jaws are coupled pivotably relative to each other by way of a tooth arrangement.


**Revendications**

1. Scie à ruban pour découper des carcasses d'animaux avec un dispositif de tension (15) pour tendre le ruban de scie (5) sans fin passant sur deux rouleaux (3, 4) et deux guides de redressement (7, 7') par lesquels le tronçon coupant (6) du ruban de scie (5) est mis par redressement sensiblement en alignement avec le plan de rotation des deux rouleaux (3, 4), caractérisée en ce que le dispositif de tension (15) comprend au moins un premier ressort (13) par lequel le ruban de scie (5) est mis en tension à une tension initiale de base relativement faible et le dispositif de tension (15) comprend au moins un autre ressort (16) par lequel le ruban de scie (5) reçoit sa tension finale, cependant qu'il est prévu un organe de travail (20) à l'aide duquel la force de tension de l'autre ressort (16) ou des autres ressorts peut être neutralisée pour le changement du ruban de scie (5).

2. Scie à ruban selon la revendication 1, caractérisée en ce que l'organe de travail (20) est un vérin pouvant être alimenté en fluide sous pression, au moyen duquel par l'effet de la pression du fluide sous pression la force de tension de l'autre ressort (16) peut être neutralisée et en l'absence de fluide sous pression dans le vérin, la force de tension de l'autre ressort (16) tend le ruban de scie (5).

3. Scie à ruban selon la revendication 1 ou 2, caractérisée en ce que la force de tension initiale de l'autre ressort (16) est réglable.

4. Scie à ruban selon l'une des revendications 1 à 3, caractérisée en ce que la force de tension initiale du premier ressort (13) produit une force de tension du ruban de scie d'environ 2,5 kgf (25 N), et la force de tension initiale de l'autre ressort (16) une force de tension du ruban de scie d'environ 250 à 300 kgf (2.500 à 3.000 N).

5. Scie à ruban selon l'une des revendications 1 à 4, caractérisée en ce que l'autre ressort (16) est constitué par un ensemble de rondelles élastiques.

6. Scie à ruban selon l'une des revendications 1 à 5, caractérisée en ce que l'organe de travail (20) est un vérin à simple effet et l'autre ressort (16) est disposé du côté du piston opposé à la chambre de pression pour agir directement sur le piston (19).

7. Scie à ruban selon la revendication 6, caractérisée en ce que le piston (19) comprend un poussoir (23) sortant du corps (17) du vérin et au moyen duquel l'un des rouleaux (4) peut être déplacé par rapport à l'autre rouleau (3).

8. Scie à ruban selon la revendication 6 ou 7, caractérisée en ce que le piston (19) de l'organe de travail (20) est relié rigidement à une tige de guidage (21) guidée à travers l'autre ressort (16), et l'extrémité libre de cette tige de guidage (21) est guidée dans une vis de réglage de tension initiale (18).

9. Scie à ruban selon l'une des revendications 1 à 8, caractérisée en ce que l'organe de travail (20) et l'autre ressort (16) sont placés dans un carter commun (17), et ce carter (17) est fixé de façon détachable au bâti porteur (1).

10. Scie à ruban selon la revendication 1, caractérisée en ce que les guides de redressement (7, 7') sont disposés pour être déplacés de façon coulissante ou pivotante par rapport au tronçon coupant (6) chacun au moyen d'un organe de travail (8, 8'), constitué avantageusement par un vérin.

11. Scie à ruban selon l'une des revendications 1 à 10, caractérisée en ce que, lors d'un changement de ruban, une commande mécanique ou électrique supprime au moment de la détente d'abord par l'intermédiaire de l'organe de travail (20) agissant sur l'autre ressort (16) cette tension du ruban, et ensuite fait d'abord coulisser ou pivoter en arrière les guides de redressement (7, 7') pour la libération du ruban de scie (5), et en ce que, pour la mise en tension du ruban de scie (5), les guides de redressement (7, 7') sont d'abord remis de leur position de changement de ruban à leur position de redressement, et peu après l'autre ressort (16) est de nouveau libéré de l'organe de travail (20) agissant sur lui, pour produire la tension finale du ruban de scie.

12. Scie à ruban selon la revendication 10 ou 11, caractérisée en ce que le guide de redressement (7, 7') est guidé dans le sens axial du tronçon coupant (6) du ruban de scie (5) pour pouvoir tourner de 90° environ.

13. Scie à ruban selon la revendication 12, caractérisée en ce que le guide de redressement (7) est guidé pour pouvoir tourner sur un tube de guidage (24) cylindrique fendu contenant le ruban de scie, s'étendant coaxialement à ce ruban de scie (5).

14. Scie à ruban selon la revendication 10 ou 11, caractérisée en ce que le guide de redressement (7) est prévu à l'extrémité d'un levier pivotant (26) pouvant pivoter par rapport à l'organe de travail (8), le plan de pivotement se trouvant dans le plan de coupe du ruban de scie (5) (figures 9, 10) ou dans un plan perpendiculaire au plan de coupe du ruban de scie (5) (figures 7, 8).

15. Ruban de scie selon la revendication 14, caractérisé en ce que le levier pivotant (26) est relié à l'organe de travail (8) par un organe intermédiaire (27).

16. Scie à ruban selon la revendication 10 ou 11, caractérisée en ce que le guide de redressement (7) est placé à l'extrémité libre d'une tige de piston (9, 9') d'un vérin.

17. Scie à ruban selon la revendication 10 ou 11, caractérisée en ce que le guide de redressement (7, 7') comprend deux mâchoires mobiles l'une par rapport à l'autre à la façon d'une pince, par lesquelles le tronçon coupant (6) du ruban de scie (5) est guidé en redressement dans les mâchoires à l'état fermé.

18. Scie à ruban selon la revendication 17, caractérisée en ce que les deux mâchoires sont accouplées en pivotement l'une par rapport à l'autre au moyen d'un engrènement.

*Fig.1*

EP 0 126 912 B1

Fig.4

Fig.2

Fig.3

*Fig.5*

*Fig.6*

*Fig.7*

*Fig.8*

*Fig.9*

*Fig.10*

3